# EUROPEAN PATENT SPECIFICATION

(11) **EP 1 937 502 B1**
(45) Date of publication and mention of the grant of the patent: **27.04.2011**
(21) Application number: 06765345.1
(22) Date of filing: 30.08.2006
(51) Int. Cl.: B60K 15/067

(54) **TANK ASSEMBLY**
TANKANORDNUNG
ENSEMBLE RÉSERVOIR

(30) Priority: 16.09.2005 GB 0518965
(43) Date of publication of application: 02.07.2008
(73) Proprietor: Nissan Motor Manufacturing (UK) Ltd., Cranfield Bedfordshire MK43 0DB (GB)
(72) Inventor: KAVANAGH, Rob, Bedfordshire MK43 0DB (GB)
(74) Representative: Holmes, Matthew William
(86) International application number: PCT/GB2006/003211
(87) International publication number: WO 2007/031705

(56) References cited:
- EP-A1- 0 373 143
- EP-A2- 1 464 528
- DE-A1- 3 445 427
- FR-A1- 2 530 551
- US-A- 3 330 439

## Description

### Technical Field

The present invention relates to a tank for storing or transporting fluid in an automotive vehicle. In particular, but not exclusively, the invention relates to a tank for storing fuel (e.g. diesel or gasoline) that is to be supplied to the vehicle engine to power the vehicle, in use. It is a particular aspect of the invention to provide an improved means of supporting the fuel tank on the vehicle chassis.

### Background to the Invention

US 3330439 discloses a plastic moulded fuel tank having the features of the precharacterising portion of claim 1.

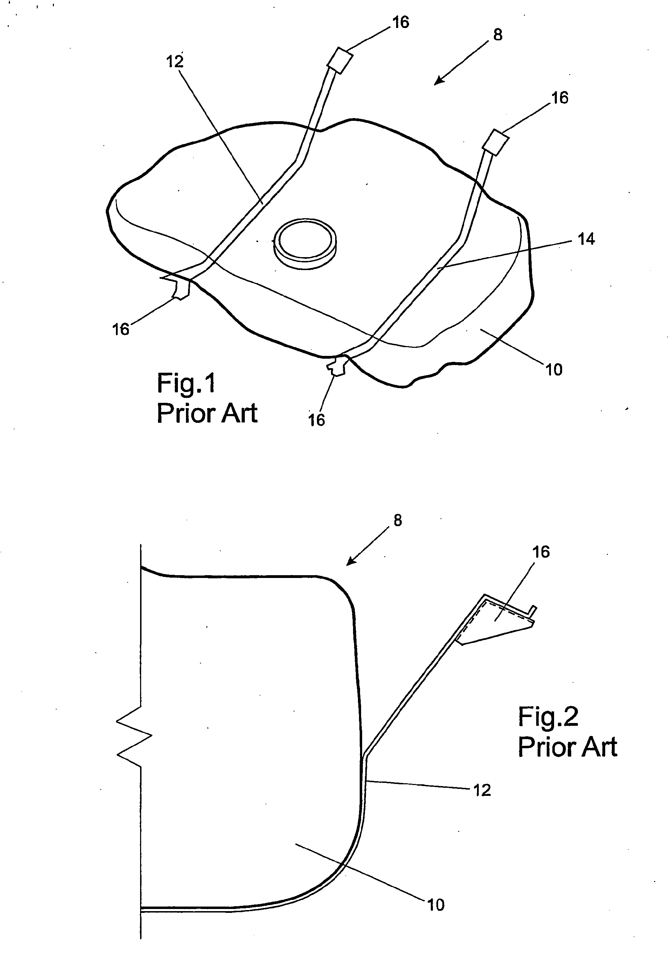

Referring to Figures 1 and 2, there is shown a conventional fuel tank assembly, referred to generally as 8, including a fuel tank body 10 which defines a tank volume for storing fuel. The tank body 10 is supported on the underside of the vehicle chassis (not shown) by means of first and second metal straps 12, 14. The main length of each strap 12, 14 passes underneath the bottom of the tank body 10 so that one end of each strap extends up the tank sidewall on one side of the tank body 10 and the other end of each strap 12, 14 extends up the tank sidewall on the other side of the tank body 10.

It is usual to provide two metal straps 12, 14 to support the tank body 10 adequately, with one strap 12 being located towards the left side of the vehicle and the other strap 14 being located towards the right side of the vehicle. Each strap 12, 14 is shaped to follow the contour of the underside of the tank body 10, before bending outwards (as shown in Figure 2) part way along the tank sidewalls. The ends of each strap 12, 14 are provided with a fastening section 16 which is attached, by means of a bolt, to the vehicle chassis to secure the straps 12, 14, and hence the tank body 10, in position.

It is also known to use just a single strap to support the tank 10, wherein the strap is of increased width.

The straps 12, 14 are typically formed from steel, and so it is one disadvantage that they add cost and weight to the fuel tank assembly 8 as a whole. It is a further problem with current fuel tanks that they are prone to bow during use, causing wear of the tank body 10 and the metal support straps 12, 14. This is a particular problem when the vehicle is travelling over uneven terrain, when travelling over roads provided with traffic calming ramps (speed bumps) or in vehicles where the clearance between the underside of the vehicle and the road surface is particularly low. Unwanted deflection of the bottom of the tank body 10 can also occur as a result of the difference between the static and dynamic weight of fuel within the tank body 10. It is also a recognised problem that a superatmospheric pressure is generated inside the tank body 10 during vehicle operation and this can result in a bowing or distortion of the fuel tank walls and base. Any scuffing of the underside of the tank body 10 leads to premature wear of the straps 12, 14 and, in extreme cases, can cause the straps to wear through or snap altogether.

Another known means (not shown) of supporting the fuel tank on a vehicle is to integrate a support structure within the fuel tank material itself. Integral supports are widely used for plastic fuel tanks which, during production, undergo a blow moulding process to create the fuel tank storage volume. A result of the blow moulding process is that the tank body is formed with a lip around its outer periphery. The tank lip is utilised as a means of supporting the fuel tank by modifying the lip to include suitable openings through which bolts are received to secure the integrated tank supports to the chassis.

Whilst the use of a plastic fuel tank with integral supports should in theory provide a benefit that part count is reduced, it has been found that such fuel tanks are less secure than those held in place by conventional metal straps so it has been necessary in some vehicle applications to supplement the integrated support function with metal straps also. Furthermore, whilst such tanks are suitable for use on relatively small vehicles having a low fuel tank capacity, they are not suitable for use on vehicles with larger capacity tanks.

There remains a need, therefore, for a fuel tank assembly having a support structure suitable for use in large and small vehicles alike and which is immune to the aforementioned problems associated with conventional fuel tank assemblies. It is an aim of the present invention to provide an improved tank assembly which addresses these problems.

### Summary of Invention

According to a first aspect of the present invention, there is provided a tank assembly for use in an automotive vehicle, the tank assembly comprising a tank body comprising a first plastic material, support means for supporting the tank body upon the vehicle, and attachment means for attaching the support means to the vehicle. The tank assembly is characterised in that the support means includes a fibre reinforced plastic strap including a main strap length separating first and second opposed strap ends, wherein at least a portion of the fibre reinforced plastic strap is embedded within the tank body, the portion of the strap embedded within the tank body being the main strap length.

It is one advantage of the present invention that the requirement for metal straps to support the fuel tank body under the vehicle chassis is removed, hence reducing the weight of the overall tank assembly. It is a further advantage that the fibre reinforced plastic straps are cheaper than metal straps, and so the overall cost of the fuel tank assembly is also reduced. As the fibre reinforced plastic strap of the fuel tank assembly is embedded or integrated within the tank body itself, the strap is not exposed underneath the vehicle chassis when in use. Any scuffing or wear of the strap is therefore avoided so that the supportive function of the strap is not compromised. It is a further benefit that, due to the strap being integrated within the tank body itself, there is a reduced part count for transportation purposes during manufacture/production. The overall product cost of the fuel tank assembly is therefore reduced.

In a preferred embodiment, the strap attachment means is provided at each of the first and second opposed ends of the strap.

The attachment means may include a connector (for example, a spade connector) provided at the first and second opposed strap ends, wherein each connector is co-operable with an attachment member so as to attach the attachment means, and hence the tank assembly, to the vehicle. By way of example, the attachment member may be a bolt.

In a preferred embodiment, the first and second opposed strap ends of the fibre reinforced plastic strap are embedded within the tank body.

In this case, the first and second strap ends may be embedded within a lip or flange of the tank body. The lip is formed as a by-product of the blow moulding process, so this lip provides a convenient means of integrating the strap with the tank body without modifying substantially the existing tank body part.

Preferably, each of the first and second opposed strap ends is embedded within a respective lip or flange of the tank body.

In one embodiment the main strap length may extend through, the tank body at least twice to define at least one strap loop which is provided with the attachment means.

The tank assembly may include a single fibre reinforced strap, or may include a plurality of fibre reinforced straps.

In a preferred embodiment, the fibre reinforced plastic strap is formed from a second plastic material provided with a reinforcement material. In a particularly preferred embodiment, the fibre reinforced plastic strap is a polypropylene strap material and the reinforcement material is fibre glass, nylon or canvas.

In a preferred embodiment, the tank assembly has application as a tank assembly for storing fuel within the vehicle, wherein the support means is arranged to support the fuel tank body underneath the chassis of the vehicle.

According to a second aspect of the invention, there is provided a method of manufacturing a tank assembly for a vehicle, the method comprising providing a mould, providing a fibre reinforced plastic strap including a main strap length separating first and second opposed strap ends within the mould, providing a body of a first plastic material within the mould, subjecting the plastic body to a blow moulding process so as to create a tank body substantially in the shape of the mould and so that the main length of the fibre reinforced plastic strap becomes embedded or integrated within the tank body.

Preferred and/or optional features of the first aspect of the invention may be incorporated within the second aspect of the invention, alone or in appropriate combination.

### Brief Description of Drawings

The present invention will now be described, by way of example only, with reference to the accompanying drawings in which:
Figure 1 is a perspective view of a conventional fuel tank assembly having first and second metal straps to support the fuel tank upon the vehicle chassis,
Figure 2 is a side view of the fuel tank assembly in Figure 1,
Figure 3 is a perspective view of a fuel tank assembly in accordance with a first embodiment of the invention,
Figure 4 is a side view of the fuel tank assembly in Figure 3,
Figure 5 is an enlarged side view of the fuel tank assembly in Figure 4, and
Figure 6 is a schematic view from the underside of a tank assembly of an alternative embodiment.

### Detailed Description of Drawings

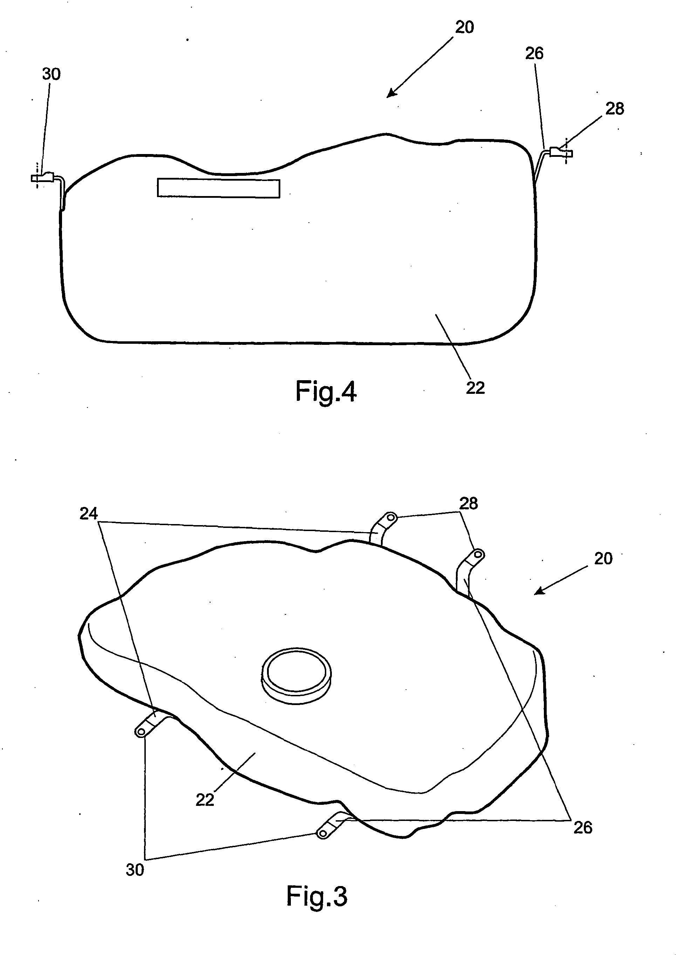

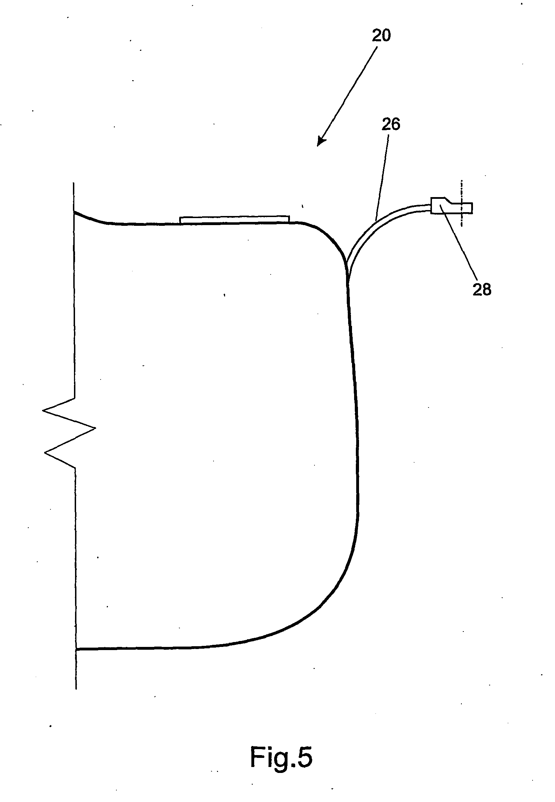

Referring to Figures 3 to 5, in accordance with the present invention the fuel tank assembly 20 includes a fuel tank body (referred to as the fuel tank) 22 which defines a fuel tank volume for storing fuel. The fuel tank 22 is formed from a plastic material by means of a blow moulding process. Conventionally, to blow mould a plastic fuel tank a tube of molten plastic is extruded into an open mould (not shown) shaped to define the fuel tank volume. Hot air is then blown into the tube to inflate the molten tube until the mould cavity is filled.

In the present invention, the conventional blow moulding process is modified in that the internal surface of the mould is overlaid with first and second reinforced tape or straps, prior to the step of inflating the molten plastic tube. As the tube inflates to fill the mould cavity, the reinforced straps bond with the plastic material so that the two become integrated, thus forming a unitary part. The blow moulding process results in the tank body 22 being formed from multiple layers of plastic material.

In Figure 3 the first and second reinforced straps are identified as 24 and 26, respectively. Each of the reinforced straps 24, 26 includes a main strap length which passes through, or is embedded within, the underside of the tank 22 as a consequence of the blow moulding process. The provision of the reinforced straps 24, 26 inside the mould during the moulding process typically results in the main strap length of each strap 24, 26 being embedded beneath the first few layers of material (e.g. one to three layers). The reinforced straps 24, 26 include first and second opposed ends separated by the main strap length. When the tank 22 is mounted to the vehicle chassis, the first reinforced strap 24 is positioned towards the left side of the vehicle and the second strap 26 is positioned towards the right side of the vehicle. Figure 4 shows a view of the fuel tank assembly 20 from the right side of the vehicle so that only the second reinforced strap 26 is visible. In each of Figures 3 to 5 only the end portions of the straps 24, 26 are visible as the main length of each strap is embedded, or integrated, within the material of the tank 22 itself.

Each of the reinforced straps 24, 26 is provided with attachment means in the form of first and second spade connectors 28, 30 provided at a respective one of the strap ends. The spade connectors 28, 30 provide a means by which the fuel tank can be bolted to the underside of the vehicle chassis in order to mount the tank 22 to the vehicle. Alternatively, a rolled pin or a keyway may be used to attach the attachment means 28, 30 to the vehicle chassis.

The reinforced straps 24, 26 are formed predominantly from a plastic material but with an integral reinforcement material to provide added strength. Typically, for example, the reinforcement strap may be formed from polypropylene strapping including a reinforcement material of fibre glass, canvas or nylon which is 'woven' into the plastic. Polypropylene strapping of the aforementioned type is used conventionally for packaging applications due to its high loading capacity. It is inexpensive and readily available commercially, but its use in automotive applications, and particularly in a fuel tank support apparatus, has not previously been considered.

As the reinforced straps 24, 26 are integrated with the tank 22 during the moulding process they provide a robust means for supporting the tank 22 on the vehicle chassis. The problem of scuffing experienced by conventional fuel tank straps is removed as the reinforced tape is not exposed to contact with the underlying road surface, but is embedded within the body of the tank itself. A further benefit is achieved in that the fuel tank 22 and attachment means 24, 30 form a unitary component so that transportation and assembly costs are reduced during the manufacturing process.

The aforementioned advantages are also realised in embodiments for which only a single reinforced strap of increased width is embedded or integrated within the tank 22.

In an alternative embodiment (not shown), instead of integrating the reinforced straps into the tank 22 using the blow moulding process, the tank 22 may be blow moulded first and then the straps 24, 26 integrated within the tank 22 afterwards. In this case the main strap length passes underneath the bottom of the tank 22, with the free ends of each strap being moulded integrally with an associated flange or lip provided on the tank. The flange may extend round the full periphery of the tank or, alternatively, each flange may be shaped so as to protrude from the tank only in the region of the reinforced strap ends so that each end embeds within its own flange. Typically, the flange may result directly from the blow moulding process, as described previously.

In order to integrate with strap ends with the flange, each flange is provided with a slot or opening through which an end of the reinforced strap is passed during assembly. The flange is then heated so as to deform the plastic material over and around the end of the reinforced strap, thus embedding the strap end with the material of the tank body 22. The fuel tank assembly is then attached to the underside of the vehicle chassis by passing a bolt through each flange. Due to the high load capacity of the reinforced strap, the fuel tank is thus supported on the vehicle chassis in a robust manner. The main strap length may be integrated with the tank in a similar manner.

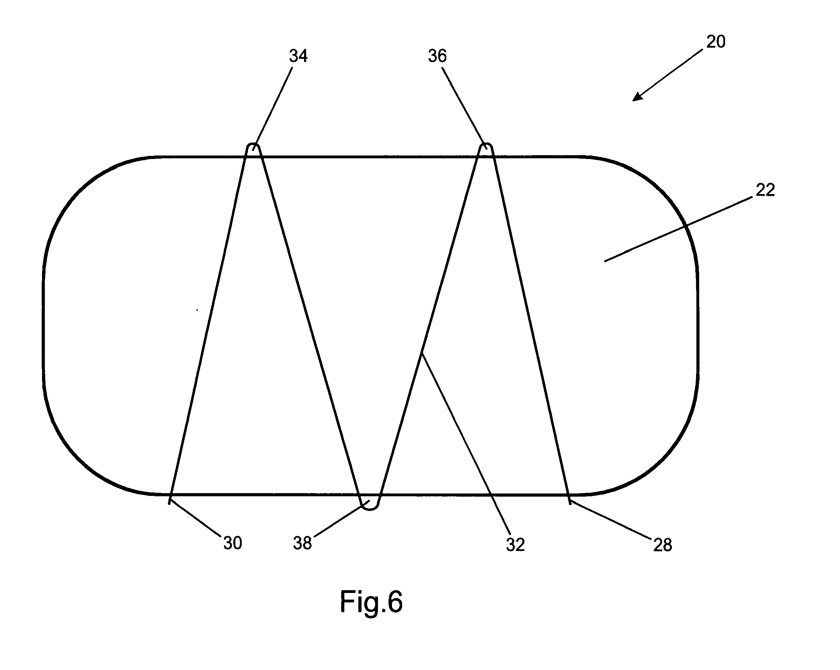

Referring to Figure 6, in a further alternative embodiment it is possible to use only one reinforced strap 32 to provide the support function. The reinforced strap traverses the underside of the fuel tank 20 three times, by looping the strap 32 at first and second loop points 34, 36 on the front of the tank 20 and at a third loop point 38 on the rear of the tank 22. At each of the loop points, suitable attachment means (e.g. such as connectors) are provided to attach the looped strap 32 to the vehicle chassis. Fasteners 28, 30, such as those provided at the ends of the reinforced straps in Figures 3 to 5, are also provided at the free ends of the reinforced strap 32 to provide additional points of attachment to the vehicle.

The looped reinforced strap 32 is embedded within the fuel tank body 22 during the moulding process.

The present invention is not only applicable to fuel tank applications but may be applied to support other reservoirs on the vehicle. For example, the coolant storage tank on the vehicle may be supported in a similar manner, and so too may the pipe for exhaust gas. Other modifications of the tank assembly are envisaged, without departing from the scope of the invention as set out in the accompanying claims. For example, it is possible to provide any number of straps for supporting the fuel tank, and not just one or two. Furthermore, it is possible to provide multiple straps which are looped in the manner described with reference to Figure 6. The optimum number of reinforced straps will depend on the particular vehicle application, and particularly the capacity of the fuel tank it is required to support underneath the vehicle.

## Claims

1. A tank assembly (20) for use in an automotive vehicle, the tank assembly (20) comprising:
a tank body (22) comprising a first plastic material,
support means (24, 26; 32) for supporting the tank body upon the vehicle, and
attachment means (28, 30; 34, 36, 38) for attaching the support means to the vehicle,
**characterised in that** the support means includes a fibre reinforced plastic strap (24, 26; 32) including a main strap length separating first and second opposed strap ends;
wherein at least of a portion of the fibre reinforced plastic strap is embedded within the tank body (22), the portion of the strap embedded within the tank body (22) being the main strap length.

2. The tank assembly (20) as claimed in claim 1, wherein the attachment means is provided at each of the first and second opposed ends of the strap (24; 26; 32).

3. The tank assembly (20) as claimed in claim 2, wherein the attachment means includes a connector (28, 30) provided at the first and second opposed strap ends and wherein each connector (28, 30) is co-operable with an attachment member to attach the attachment means to the vehicle.

4. The tank assembly (20) as claimed in any preceding claim, wherein the first and second opposed strap ends are embedded within the tank body (22).

5. The tank assembly (20) as claimed in claim 4, wherein the first and second opposed strap ends are embedded within a lip or flange of the tank body (22).

6. The tank assembly (20) as claimed in claim 5, wherein each of the first and second strap ends is embedded within a respective lip or flange of the tank body (22).

7. The tank assembly (20) as claimed in any preceding claim, wherein the main strap length traverses the underside of the tank body (22) at least twice to define at least one strap loop (34, 36, 38) which defines the attachment means.

8. The tank assembly (20) as claimed in any preceding claim, wherein the strap (24, 26; 32) is formed from a second plastic material provided with a reinforcement material to produce a fibre reinforced plastic strap.

9. The tank assembly (20) as claimed in claim 8, wherein the reinforced strap (24, 26; 32) is a polypropylene strap and the reinforcement material is selected from one of the following: fibre glass; canvas; nylon.

10. The tank assembly (20) as claimed in any preceding claim, wherein the tank body (22) is a fuel tank reservoir for receiving fuel, in use, and wherein the support means (28, 30; 34,36, 38) is adapted to support the fuel tank reservoir underneath the chassis of the vehicle.

11. A method of manufacturing a tank assembly (20) for a vehicle, the method comprising:
providing a mould,
providing a fibre reinforced plastic strap (24, 26; 32) including a main strap length separating first and second opposed strap ends within the mould,
providing a body of a first plastic material within the mould,
subjecting the plastic body to a blow moulding process so as to create a tank body (22) substantially in the shape of the mould and so that the main strap length of the fibre reinforced plastic strap (24, 26; 32) becomes embedded or integrated within the tank body (22).

12. The method as claimed in claim 11, wherein the strap (24, 26; 32) is formed from a second plastic material provided with a fibre reinforcement material to form a fibre reinforced plastic strap.

13. The method as claimed in claim 12, wherein the fibre reinforced plastic strap (24, 26; 32) is a polypropylene strap and the reinforcement material is selected from one of the following: fibre glass; canvas; nylon.

## Patentansprüche

1. Tankbaugruppe (20) für die Verwendung in einem Kraftfahrzeug, wobei die Tankbaugruppe (20) Folgendes umfasst:
einen Tankkörper (22), der ein erstes Kunststoffmaterial umfasst,
Haltemittel (24, 26; 32) zum Halten des Tankkörpers auf dem Fahrzeug, und
Befestigungsmittel (28, 30; 34, 36, 38) zum Befestigen des Haltemittels am Fahrzeug,
**dadurch gekennzeichnet, dass** das Haltemittel einen faserverstärkten Kunststoffriemen (24, 26; 32) mit einem das erste und das zweite einander gegenüberliegende Riemenende trennenden Hauptriemenstück umfasst;
wobei mindestens ein Abschnitt des faserverstärkten Kunststoffriemens im Tankkörper (22) eingebettet ist, wobei es sich bei dem im Tankkörper (22) eingebetteten Abschnitt des Riemens um das Hauptriemenstück handelt.

2. Tankbaugruppe (20) nach Anspruch 1, wobei das Befestigungsmittel jeweils am ersten und am zweiten einander gegenüberliegenden Ende des Riemens (24; 26; 32) vorgesehen ist.

3. Tankbaugruppe (20) nach Anspruch 2, wobei das Befestigungsmittel einen am ersten und einen am zweiten einander gegenüberliegenden Riemenende vorgesehenen Verbinder (28, 30) umfasst und wobei die Verbinder (28, 30) jeweils mit einem Befestigungselement zusammenwirken können, um das Befestigungsmittel am Fahrzeug zu befestigen.

4. Tankbaugruppe (20) nach einem der vorangehenden Ansprüche, wobei das erste und das zweite einander gegenüberliegende Riemenende im Tankkörper (22) eingebettet sind.

5. Tankbaugruppe (20) nach Anspruch 4, wobei das erste und das zweite einander gegenüberliegende Riemenende in einer Lippe oder einem Flansch des Tankkörpers (22) eingebettet sind.

6. Tankbaugruppe (20) nach Anspruch 5, wobei das erste und das zweite einander gegenüberliegende Riemenende jeweils in einer jeweiligen Lippe oder einem jeweiligen Flansch des Tankkörpers (22) eingebettet sind.

7. Tankbaugruppe (20) nach einem der vorangehenden Ansprüche, wobei das Hauptriemenstück die Unterseite des Tankkörpers (22) mindestens zweimal quert, um mindestens eine Riemenschlaufe (34, 36, 38) zu definieren, die das Befestigungsmittel definiert.

8. Tankbaugruppe (20) nach einem der vorangehenden Ansprüche, wobei der Riemen (24, 26; 32) aus einem zweiten Kunststoffmaterial gebildet ist, das mit einem Verstärkungsmaterial versehen ist, um einen faserverstärkten Kunststoffriemen zu erzeugen.

9. Tankbaugruppe (20) nach Anspruch 8, wobei es sich bei dem verstärkten Riemen (24, 26; 32) um einen Polypropylenriemen handelt und das Verstärkungsmaterial aus einem der Folgenden ausgewählt wird: Glasfaser, Segeltuch; Nylon.

10. Tankbaugruppe (20) nach einem der vorangehenden Ansprüche, wobei es sich bei dem Tankkörper (22) um einen Kraftstofftankbehälter zum Aufnehmen von Kraftstoff in Gebrauch handelt, und wobei das Haltemittel (28, 30; 34,36, 38) dazu angepasst ist, den Kraftstofftankbehälter unter dem Fahrgestell des Fahrzeugs zu halten.

11. Verfahren zum Herstellen einer Tankbaugruppe (20) für ein Fahrzeug, wobei das Verfahren Folgendes umfasst:
Bereitstellen einer Form,
Bereitstellen eines faserverstärkten Kunststoffriemens (24, 26; 32) mit einem das erste und das zweite einander gegenüberliegende Riemenende trennenden Hauptriemenstück in der Form,
Bereitstellen eines Körpers aus einem ersten Kunststoffmaterial in der Form,
Aussetzen des Kunststoffkörpers an einen Blasformprozess, um einen Tankkörper (22) im Wesentlichen in der Form der Form und so dass das Hauptriemenstück des faserverstärkten Kunststoffriemens (24, 26; 32) im Tankkörper (22) eingebettet oder darin integriert wird, zu erzeugen.

12. Verfahren nach Anspruch 11, wobei der Riemen (24, 26; 32) aus einem zweiten Kunststoffmaterial gebildet wird, das mit einem Faserverstärkungsmaterial versehen ist, um einen faserverstärkten Kunststoffriemen zu bilden.

13. Verfahren nach Anspruch 12, wobei es sich bei dem faserverstärkten Kuntstoffriemen (24, 26; 32) um einen Polypropylenriemen handelt und das Verstärkungsmaterial aus einem der Folgenden ausgewählt wird: Glasfaser, Segeltuch; Nylon.

## Revendications

1. Ensemble de réservoir (20) destiné à être utilisé dans un véhicule automobile, l'ensemble de réservoir (20) comprenant :
un corps de réservoir (22) comprenant un premier matériau plastique,
un moyen de support (24, 26 ; 32) pour supporter le corps de réservoir sur le véhicule, et
un moyen de fixation (28, 30 ; 34, 36, 38) pour fixer le moyen de support au véhicule,
**caractérisé en ce que** le moyen de support comporte une sangle en plastique renforcé de fibres (24, 26 ; 32) comportant une longueur de sangle principale séparant des première et seconde extrémités de sangle opposées ;
dans lequel au moins une partie de la sangle en plastique renforcé de fibres est noyée dans le corps de réservoir (22), la partie de la sangle noyée dans le corps de réservoir (22) étant la longueur de sangle principale.

2. Ensemble de réservoir (20) selon la revendication 1, dans lequel le moyen de fixation est fourni à chacune des première et seconde extrémités opposées de la sangle (24 ; 26 ; 32).

3. Ensemble de réservoir (20) selon la revendication 2, dans lequel le moyen de fixation comporte un connecteur (28, 30) fourni aux première et seconde extrémités de sangle opposées et dans lequel chaque connecteur (28, 30) peut coopérer avec un élément de fixation pour fixer le moyen de fixation au véhicule.

4. Ensemble de réservoir (20) selon l'une quelconque des revendications précédentes, dans lequel les première et seconde extrémités de sangle opposées sont noyées dans le corps de réservoir (22).

5. Ensemble de réservoir (20) selon la revendication 4, dans lequel les première et seconde extrémités de sangle opposées sont noyées dans une lèvre ou une bride du corps de réservoir (22).

6. Ensemble de réservoir (20) selon la revendication 5, dans lequel chacune des première et seconde extrémités de sangle opposées est noyée dans une lèvre ou une bride respective du corps de réservoir (22).

7. Ensemble de réservoir (20) selon l'une quelconque des revendications précédentes, dans lequel la longueur de sangle principale traverse le dessous du corps de réservoir (22) au moins deux fois pour définir au moins une boucle de sangle (34, 36, 38) qui définit le moyen de fixation.

8. Ensemble de réservoir (20) selon l'une quelconque des revendications précédentes, dans lequel la sangle (24, 26 ; 32) est formée à partir d'un second matériau plastique doté d'un matériau de renforcement pour produire une sangle en plastique renforcé de fibres.

9. Ensemble de réservoir (20) selon la revendication 8, dans lequel la sangle renforcée (24, 26 ; 32) est une sangle de polypropylène et le matériau de renforcement est sélectionné parmi l'un des matériaux suivants : fibre de verre ; toile ; nylon.

10. Ensemble de réservoir (20) selon l'une quelconque des revendications précédentes, dans lequel le corps de réservoir (22) est un réservoir de carburant destiné à recevoir un carburant, durant l'utilisation, et dans lequel le moyen de support (28, 30 ; 34, 36 ,38) est adapté pour supporter le réservoir de carburant sous le châssis du véhicule.

11. Procédé de fabrication d'un ensemble de réservoir (20) pour véhicule, le procédé comprenant :
la fourniture d'un moule,
la fourniture d'une sangle en plastique renforcé de fibres (24, 26 ; 32) comportant une longueur de sangle principale séparant des première et seconde extrémités de sangle opposées dans le moule,
la fourniture d'un corps d'un premier matériau plastique dans le moule,
la soumission du corps plastique à un processus de moulage par soufflage de façon à créer un corps de réservoir (22) sensiblement de la forme du moule et de telle sorte que la longueur de sangle principale de la sangle en plastique renforcé de fibres (24, 26 ; 32) soit noyée ou intégrée dans le corps de réservoir (22).

12. Procédé selon la revendication 11, dans lequel la sangle (24, 26 ; 32) est formée à partir d'un second matériau plastique doté d'un matériau de fibres de renforcement afin de former une sangle en plastique renforcé de fibres.

13. Procédé selon la revendication 12, dans lequel la sangle en plastique renforcé de fibres (24, 26 ; 32) est une sangle de polypropylène et le matériau de renforcement est sélectionné parmi l'un des matériaux suivants : fibre de verre ; toile ; nylon.
